# EUROPÄISCHE PATENTANMELDUNG

(11) **EP 4 660 494 A1**
(43) Veröffentlichungstag der Anmeldung: **10.12.2025**
(21) Anmeldenummer: 24180284.2
(22) Anmeldetag: 05.06.2024
(51) Int. Cl.: F16K 11/085, B60K 11/02, F16K 27/06, F16K 49/00

(54) **MEDIENFÜHRENDES ELEMENT UND VERTEILANORDNUNG FÜR DEN TRANSPORT VON MEDIEN**

(71) Anmelder: TI Automotive Technology Center GmbH, 76437 Rastatt (DE)
(72) Erfinder: Kizilay, Irfan, 68799 Reilingen (DE); Lindow, Manuel, 76593 Gernsbach (DE); Leipold, Stefan, 67470 Seltz (FR)
(74) Vertreter: Reiser & Partner Patentanwälte mbB

(57) **Zusammenfassung**

Medienführendes Element (1), umfassend ein Gehäuse (2), welches ein Volumen (3) begrenzt, wobei in das Gehäuse (2) zumindest zwei Fluidöffnungen (4, 5) eingebracht sind, wobei die Fluidöffnungen (4, 5) jeweils mit einer Fluidleitung (6, 7) verbunden sind, wobei das Volumen (3) mit den Fluidöffnungen (4, 5) zusammenwirkt, wobei das Gehäuse (2) außenseitig zumindest abschnittsweise von einer Umhüllung (8) umgeben ist, wobei das Gehäuse (2) und die Umhüllung (8) ein Durchströmvolumen (9) begrenzen, wobei in das Durchströmvolumen (9) zumindest zwei in die Umhüllung (8) eingebrachte Fluidanschlüsse (10, 11) münden sowie Verteilanordnung (20) für den Transport von Medien.

## Beschreibung

Die Erfindung betrifft ein medienführendes Element, umfassend ein Gehäuse, welches ein Volumen begrenzt, wobei in das Gehäuse zumindest zwei Fluidöffnungen eingebracht sind, wobei die Fluidöffnungen jeweils mit einer Fluidleitung verbunden sind, wobei das Volumen mit den Fluidöffnungen zusammenwirkt, wobei das Gehäuse außenseitig zumindest abschnittsweise von einer Umhüllung umgeben ist und eine Verteilanordnung für den Transport von Medien.

Ein derartiges medienführendes Element in Form eines Ventils ist beispielsweise aus der EP 4 008 935 A1 bekannt. Ventile finden häufig in Kühlkreisläufen zur Steuerung des Kühlmittelstroms Einsatz. Durch die in das Ventilgehäuse eingebrachten Fluidöffnungen kann ein Kühlfluid in das Ventil ein- und ausströmen. Der Ventilkörper ist mit einer Kanalstruktur versehen und steuert den Kanalmittelstrom, wobei je nach Ausgestaltung und Anzahl der Fluidöffnungen unterschiedliche Kühlkreisläufe angesteuert, der Volumenstrom reguliert oder die Durchflussrichtung angepasst werden können.

Häufig finden derartige Ventile Einsatz in Temperierkreisläufen im Bereich der Elektromobilität. Zur Erzielung einer hohen Reichweite von Elektrofahrzeugen ist es zumeist erforderlich, elektrische Komponenten zu temperieren. Zu temperierende Komponenten sind dabei insbesondere Akkumulatoren, aber auch die Leistungselektronik oder Steckverbindungen von Schnellladeeinrichtungen. Ein Akkumulator hat eine bestmögliche Kapazität nur in einem sehr kleinen Temperaturspektrum. Daher ist es erforderlich, Akkumulatoren von Elektrofahrzeugen bei tiefen Umgebungstemperaturen zu erwärmen und bei hohen Außentemperaturen oder bei einer Lastabnahme zu kühlen.

Hierzu ist es bekannt, einen Temperierkreislauf vorzusehen, durch welchen ein Temperiermedium strömt. Das Temperiermedium kann dabei je nach Anforderung entweder in einer Heizeinrichtung erwärmt oder in einer Kühleinrichtung gekühlt werden. Die Steuerung des Temperiermediumstroms kann dabei durch ein oder mehrere Ventile der eingangs genannten Art erfolgen.

Insbesondere in Elektrofahrzeugen ist der zur Verfügung stehende Bauraum begrenzt und die Verteilung des Temperiermediums soll daher möglichst über eine integrierte Verteilanordnung erfolgen. Diese beinhaltet mehrere Kanäle und Funktionselemente, durch die Temperiermedien geleitet und zu den zu temperierenden Komponenten geführt werden können. Je nach Anordnung der Komponenten kann es dabei erforderlich sein, dass sich Kanäle überkreuzen, ohne dass sich die Medienströme dabei durchmischen, was zumeist mit einem erhöhten Bauraumbedarf und einer erhöhten Anzahl von Bauteilkomponenten einhergeht.

Der Erfindung liegt die Aufgabe zugrunde, ein medienführendes Element bereitzustellen, welches mit einfachen Mitteln komplexe Fluidführungen bei geringem Bauraumbedarf ermöglicht.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst das medienführende Element ein Gehäuse, welches ein Volumen begrenzt, wobei in das Gehäuse zumindest zwei Fluidöffnungen eingebracht sind, wobei die Fluidöffnungen jeweils mit einer Fluidleitung verbunden sind, wobei das Volumen mit den Fluidöffnungen zusammenwirkt, wobei das Gehäuse außenseitig zumindest abschnittsweise von einer Umhüllung umgeben ist, wobei das Gehäuse und die Umhüllung ein Durchströmvolumen begrenzen, wobei in das Durchströmvolumen zumindest zwei in die Umhüllung eingebrachte Fluidanschlüsse münden.

Dabei steht das in den Fluidleitungen geführte Medium nicht in strömungsleitender Verbindung mit der Umhüllung, sodass Medium, welches im Durchströmvolumen vorhanden ist, nicht in die Fluidleitungen gelangen kann und umgekehrt. Das Durchströmvolumen stellt ein dem medienführenden Element zugeordnetes Volumen bereit, welches eine Aufnahme, eine Speicherung oder ein Durchleiten von Medium erlaubt, wobei das Medium über die Fluidanschlüsse in die Umhüllung ein- und ausströmt. Dadurch kann ein Medium das medienführende Element kreuzen, ohne dass es durch die Steuerorgane des medienführenden Elementes, beispielsweise einem Ventilkörper, beeinflusst wird. Das durch die Fluidleitungen in das Gehäuse geleitete Medium wird hingegen in das Volumen geleitet und aus dem Volumen abgeführt, ohne mit dem durch die Umhüllung geleiteten Medium in Kontakt zu gelangen. Das Durchströmvolumen stellt einen Bypass bereit, durch den Fluid das medienführende Element unabhängig von dem Medium kreuzen kann, welches in das Volumen ein- und ausströmt. Das Volumen und das Durchströmvolumen sind mediendicht voneinander separiert und die durch das Volumen und das Durchströmvolumen geleiteten Medien können unabhängig voneinander beeinflusst werden.

Das medienführende Element kann als Pumpe, Rohrkreuzung oder Gefäß, insbesondere als Ausdehnungsgefäß, ausgebildet sein.

Das medienführende Element kann als Ventil ausgebildet sein, wobei in dem Volumen ein Ventilkörper aufgenommen ist, wobei der Ventilkörper mit den Fluidöffnungen zusammenwirkt. Das Durchströmvolumen stellt ein dem Ventil zugeordnetes Volumen bereit, welches ein Durchleiten von Medium erlaubt, das über die Fluidanschlüsse in die Umhüllung ein- und ausströmt. Dadurch kann ein Medium das Ventil kreuzen, ohne dass es durch die Steuerorgane des Ventils, beispielsweise dem Ventilkern, beeinflusst wird. Das durch die Fluidleitungen in das Ventilgehäuse geleitete Medium wird hingegen durch den Ventilkern beeinflusst, sodass die Menge und die Strömungsrichtung des in den Fluidleitungen geführten Mediums dadurch modifiziert werden können.

Das Gehäuse, der Ventilkörper und/oder die Umhüllung können aus Kunststoff ausgebildet sein. Vorzugsweise gelangt dabei ein thermoplastischer Kunststoff zum Einsatz. Dadurch ist das medienführende Element kostengünstig herstellbar.

Bevorzugte Werkstoffe für das Gehäuse, den Ventilkörper und die Umhüllung sind beispielsweise aus der Gruppe der Polyoxymethylene (POM), Polyphenylensulfide (PPS), Polypropylen (PP) oder Polyamide (PA) ausgewählt. Auch thermoplastische Elastomere wie thermoplastische Vulkanisate (TPV) oder thermoplastische Olefine (TPO) können zum Einsatz gelangen. Die Kunststoffe können mit Zuschlägen, beispielsweise einer Faserverstärkung oder einer Leitfähigkeitsausrüstung basierend auf Glasfasern oder Zuschlägen zur Erhöhung der Leitfähigkeit versehen sein.

Denkbar ist ferner, dass das Gehäuse als Verbundelement aus zumindest zwei Materialien ausgebildet ist. Beispielsweise kann der Gehäusekörper des Gehäuses aus Kunststoff und ein Anschlusselement des Gehäuses aus einem metallischen Werkstoff ausgebildet sein. Ebenso denkbar ist der Einsatz eines Kunststoff-Compounds, wobei insbesondere auf die Verbindungsschnittstellen angepasste Werkstoffe ausgewählt werden können.

Die Umhüllung kann als Mehrschichtverbund ausgebildet sein. Dabei kann die Umhüllung Haftvermittlerlagen und/oder geschäumte Lagen umfassen.

Das Gehäuse und/oder die Umhüllung können als Blasformteil ausgebildet sein. Die Herstellung von Ventilgehäuse und Umhüllung im Blasformverfahren ermöglicht die kostengünstige Herstellung von Ventilgehäuse und Umhüllung, wobei jeweils die Ausgestaltung einer komplexen Geometrie möglich ist. Alternativ können das Gehäuse und/oder die Umhüllung kostengünstig als Spritzgussteil ausgebildet sein. Der Ventilkörper ist vorzugsweise als Spritzgussteil ausgebildet.

Das Ventil kann als Rückschlagventil oder als Schaltventil ausgebildet sein. Das Ventil kann dabei insbesondere als Rotationsventil ausgebildet sein, wobei der Ventilkörper drehbar in dem Ventilgehäuse angeordnet ist. Bei einem Rotationsventil erfolgt eine Anpassung des durch die Fluidleitungen geführten Medienstroms durch Drehen des Ventilkörpers, wobei der entsprechende Aktor zum Drehen des Ventilkörpers einfach ausgebildet und einfach ansteuerbar ist. Dementsprechend sind Rotationsventile und die dazugehörigen Aktoren kostengünstig herstellbar. Ein weiterer Vorteil ist, dass ein Rotationsventil die Medienführung in mehreren Fluidleitungen gleichzeitig beeinflussen kann und dabei nur wenig Bauraum benötigt. Es ist ebenso denkbar, dass das Ventil als Rückschlagventil ausgebildet ist.

Die Umhüllung kann einen Abschnitt einer Verteilanordnung bilden. Die Verteilanordnung umfasst mehrere integrierte Fluidleitungen, über die Medium zu Komponenten geleitet wird, die an die Verteilanordnung angeschlossen sind. Die Verteilanordnung ist besonders kompakt und benötigt nur wenig Bauraum. Dadurch, dass die Umhüllung einen Abschnitt der Verteilanordnung bildetet, ist das medienführende Element in die Verteilanordnung integriert, was eine besonders kompakte Ausgestaltung ermöglicht.

Das Gehäuse kann in der Umhüllung aufgenommen sein. Bei dieser Ausgestaltung ist das Gehäuse vollständig von der Umhüllung umgeben. Wenn das medienführende Element ein Ventil ist, ist auch der in dem Gehäuse angeordnete Ventilkörper von der Umhüllung umgeben. Im Fall eines Rotationsventils ragt lediglich die Schaltwelle durch die Umhüllung hindurch, über die ein Drehen des Ventilkörpers angesteuert wird. Dadurch ergibt sich eine integrierte Bauweise mit besonders geringem Bauraumbedarf. Es ist denkbar, dass das Gehäuse mehrteilig, insbesondere zweiteilig ist, wobei ein Grundkörper zusammen mit der Umhüllung und den Fluidöffnungen eine Montageaufnahme für den Ventilkörper und ggf. dem Aktor des Ventilkörpers bildet.

Das Durchströmvolumen kann einer Seite des Gehäuses zugeordnet sein. Bei dieser Ausgestaltung kann das Gehäuse beispielsweise einen Ventilkörper einseitig, beispielsweise stirnseitig, abdecken und die Umhüllung überdeckt wiederum das Gehäuse unter Einschluss des Durchströmvolumens. Dabei ist das Durchströmvolumen bei dieser Ausgestaltung mediendicht von dem Volumen getrennt. Diese Ausgestaltung ist kostengünstig herstellbar.

Das Durchströmvolumen kann das Gehäuse ringförmig umgeben. Dabei kann das das Durchströmvolumen durchströmende Medium das Gehäuse außenseitig umströmen und es ergibt sich insbesondere hinsichtlich der erforderlichen Bauhöhe ein besonders geringer Bauraumbedarf. Bei dieser Ausgestaltung durchdringen keine Fluidleitungen das Durchströmvolumen und das durch die Fluidleitungen strömende Medium steht nicht mit dem Durchströmvolumen im Austausch. Insofern ist das Durchströmvolumen bei dieser Ausgestaltung mediendicht von dem Volumen getrennt.

Die die Umhüllung durchdringenden Fluidleitungen können als Stutzen ausgebildet sein. Im Fall der als Stutzen ausgebildeten Fluidleitungen können die Fluidleitungen und das Gehäuse einstückig sein. Dadurch können das Gehäuse und die darin angeschlossenen Kanäle in einem Zug hergestellt werden, beispielsweise im Blasformverfahren.

Zur Herstellung des medienführenden Elementes kann das Gehäuse mit den als Stutzen ausgebildeten Fluidleitungen in eine Blasform eingelegt werden, wobei anschließend ein Vorformling über das Gehäuse gestülpt wird, wobei aus dem Vorformling die Umhüllung ausgebildet wird. Im Blasformverfahren kann dabei insbesondere auch eine Verteilanordnung ausgebildet werden und in der Verteilanordnung sind vorzugsweise mehrere Kanäle angeordnet, wobei die Blasform so ausgebildet ist, dass die Fluidleitungen, die in das Gehäuse münden, nach dem Blasformen mit Kanälen der Verteilanordnung strömungsleitend verbunden sind. Dabei durchdringen die Fluidleitungen die Umhüllung, sodass es dort nicht zu einer Durchmischung von Medien in den Fluidleitungen und in der Umhüllung kommen kann. Insgesamt ist dadurch die Herstellung eines kompakten und integrativen Bauteils möglich.

Eine erfindungsgemäße Verteilanordnung für den Transport von Medien umfasst einen Grundkörper, in welchem mehrere Kanäle ausgebildet sind, wobei zumindest ein erfindungsgemäßes medienführendes Element in den Grundkörper aufgenommen ist, wobei erste Kanäle mit den Fluidleitungen und zweite Kanäle mit den Fluidanschlüssen verbunden sind.

Über die Verteilanordnung kann Medium zu an die Verteilanordnung angeschlossene Komponenten geleitet werden. Dies können beispielsweise Akkumulatoren, die Leistungselektronik, aber auch Wärmetauscher für die Bewährung von Fahrzeuginnenräumen von Kraftfahrzeugen sein. Das durch die ersten Kanäle geleitete Medium gelangt dabei in das medienführende Element und strömt über das Gehäuse in das Volumen ein und kann dort beeinflusst werden. Im Fall der Ausgestaltung als Ventil kann sowohl der Volumenstrom als auch die Strömungsrichtung des durch die ersten Kanäle geleiteten Mediums beeinflusst werden. Das durch die zweiten Kanäle geleitete Medium strömt über die Fluidanschlüsse in die Umhüllung und wird durch das medienführende Element nicht beeinflusst. Das Medium strömt durch das Durchströmvolumen hindurch, welches durch die Umhüllung begrenzt wird. Dadurch kann das durch die zweiten Kanäle geführte Medium das Ventil kreuzen, ohne dass es durch den Ventilkern beeinflusst wird. Die Verteilanordnung kann zumindest ein medienführendes Element in Form eines Ventils umfassen, wobei die Verteilanordnung insbesondere auch mehrere Ventile umfassen kann, die in die Verteilanordnung integriert sind.

Die Verteilanordnung kann auch weitere medienführende Elemente umfassen, beispielsweise Ausdehnungsgefäße, Pumpen, Förderpumpen und/oder Sensoren. Ferner kann die Verteilanordnung Haltestrukturen und dergleichen umfassen. Dabei bildet die Verteilanordnung ein integriertes Bauteil, welches neben der Strömungsleitung weitere Funktionalitäten aufweist, durch die das die Verteilanordnung durchströmende Medium beeinflusst werden kann oder durch die Zustandsparameter des Mediums erfasst werden können. Bei einem Einsatz der Verteilanordnung zur Verteilung von Temperiermedium kann die Verteilanordnung auch als Kühlmittelverteiler bezeichnet werden.

Der Grundkörper ist vorzugsweise durch Blasformen nach dem oben beschriebenen Blasformverfahren hergestellt. Durch das Blasformen können in den Grundkörper die Kanäle direkt eingeformt werden. Dementsprechend ist der Grundkörper vorzugsweise als Blasformteil ausgebildet und der Grundkörper kann auch die Umhüllung ausbilden. Die Kanäle und die Umhüllung sind dabei einstückig aus dem Grundkörper ausgebildet.

Einige Ausgestaltungen des erfindungsgemäßen medienführenden Elementes und der erfindungsgemäßen Verteilanordnung werden nachfolgend anhand der Figuren näher beschrieben. Diese zeigen, jeweils schematisch:

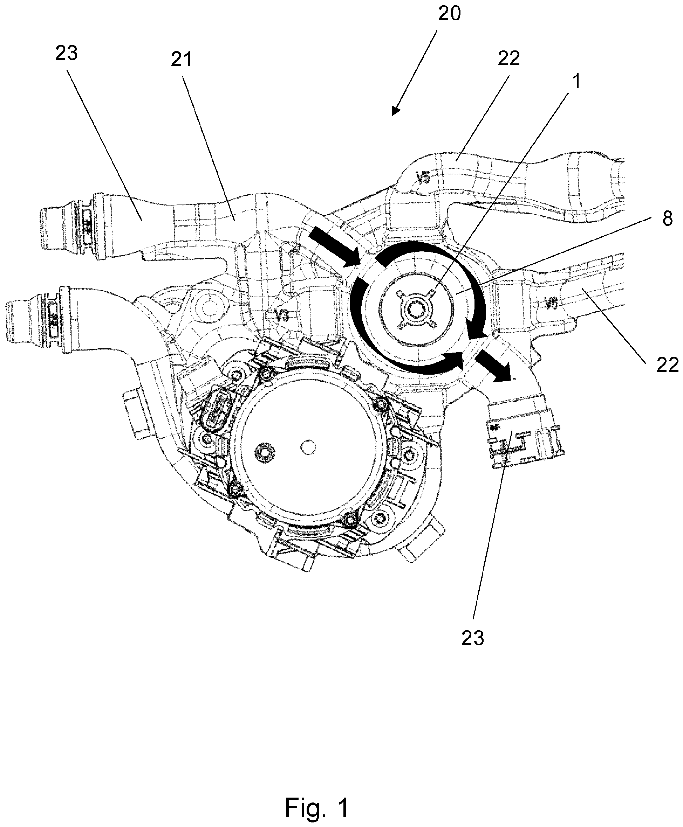

Fig. 1 eine Verteilanordnung für den Transport von Medien in der Draufsicht;
Fig. 2 die Verteilanordnung mit integriertem medienführenden Element im Schnitt.

Die Figuren zeigen eine Verteilanordnung 20 für den Transport von Medien, welche in einem Temperierkreislauf eines Elektrofahrzeugs zum Einsatz gelangt. Über die Verteilanordnung 20 können Temperiermedien verteilt und zu den zu temperierenden Einrichtungen, beispielsweise den Akkumulatoren, den Elektromotoren, der Leistungselektronik oder den Wärmetauschern der Fahrgastzellentemperierung, geleitet werden.

Die Verteilanordnung 20 umfasst einen Grundkörper 21, in welchem hier exemplarisch mehrere Kanäle 22, 23 ausgebildet sind. Ein medienführendes Element 1 in Form eines Rotationsventils ist in dem Grundkörper 21 aufgenommen. Der Grundkörper 21 ist als Blasformteil ausgebildet und besteht in dieser Ausgestaltung aus Polypropylen (PP).

Das in die Verteilanordnung 20 integrierte medienführende Element 1 umfasst ein Gehäuse 2, welches ein Volumen 3 begrenzt, wobei in dem Volumen 3 ein Ventilkörper 12 aufgenommen ist. Durch die Ausgestaltung als Rotationsventil ist der Ventilkörper 12 drehbar in dem Gehäuse 2 angeordnet. In das Gehäuse 2 sind mehrere Fluidöffnung 4, 5 eingebracht, wobei die Fluidöffnungen jeweils mit einer Fluidleitung 6, 7 verbunden sind. Der Ventilkörper 12 wirkt mit den Fluidöffnungen 4, 5 zusammen.

Das Gehäuse 2 ist außenseitig von einer Umhüllung 8 umgeben, wobei die Umhüllung 8 so ausgebildet ist, dass das Gehäuse 2 und die Umhüllung 8 ein Durchströmvolumen 9 begrenzen. Die Fluidleitungen 6, 7 durchdringen das Durchströmvolumen 9, sodass das durch die Fluidleitungen 6, 7 geführte Medium nicht in das Durchströmvolumen 9 gelangen kann.

In das Durchströmvolumen 9 münden zwei in die Umhüllung 8 eingebrachte Fluidanschlüsse 10, 11.

Das Gehäuse 2 und der Ventilkörper 12 sind aus Kunststoff ausgebildet. In dieser Ausgestaltung ist das Gehäuse 2 aus einem Verbund aus Polyamid (PA) und glasfaserverstärktem Polypropylen (PP-GF) und der Ventilkörper 12 aus einem Materialverbund, umfassend Keramik, Metall und Kunststoff, ausgebildet. Der Ventilkörper 12 ist dabei teilweise im Spritzgießverfahren hergestellt und die Umhüllung 8 im Blasformverfahren. Alternativ kann die Umhüllung 8 auch im Spritzgussverfahren hergestellt sein.

Die Umhüllung 8, in welche das Gehäuse 2 mit Ventilkörper 12 aufgenommen ist, ist Bestandteil der Verteilanordnung 20, wobei die Umhüllung 8 aus dem Grundkörper 21 ausgebildet ist.

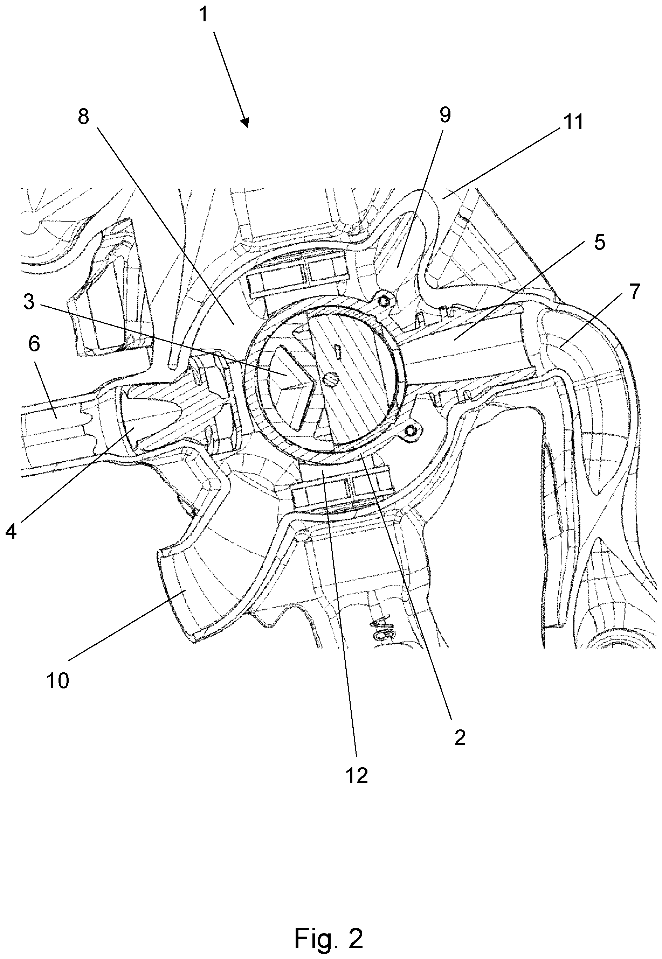

Bei der in Figur 2 dargestellten Ausgestaltung ist das Durchströmvolumen 9 einer Stirnseite des Ventilkerns 3 zugeordnet. Dabei bedeckt das Gehäuse 2 das Volumen 3 und den Ventilkörper 12 stirnseitig und die Umhüllung 8 überdeckt wiederum das Gehäuse 2 unter Einschluss des Durchströmvolumens 9.

In einer alternativen Ausgestaltung oder zusätzlich zu der stirnseitigen Anordnung kann das Durchströmvolumen 9 das Gehäuse 2 ringförmig umgeben. Dabei kann das das Durchströmvolumen 9 durchströmende Medium das Gehäuse 2 außenseitig umströmen, wobei die Fluidleitungen 6, 7 die Umhüllung 8 durchdringen, sodass es dort nicht zu einer Durchmischung von Medien von Fluidleitungen 6, 7 und Umhüllung 8 kommt.

Die die Umhüllung 8 durchdringenden Fluidleitungen 6, 7 sind als Stutzen ausgebildet und einstückig mit dem Gehäuse 2 im Blasformverfahren hergestellt.

In dem Grundkörper 21 sind mehrere Kanäle 22, 23 ausgebildet, wobei erste Kanäle 22 mit den Fluidleitungen 6, 7 und zweite Kanäle 23 mit den Fluidanschlüssen 10, 11 verbunden sind. Der Grundkörper 21 bildet die Umhüllung 8 aus.

Zur Herstellung der Ventilanordnung 20 wird ein medienführendes Element 1 mit Gehäuse 2 und den als Stutzen ausgebildeten Fluidleitungen 6, 7 in eine Blasform eingelegt. Anschließend wird ein Vorformling über das Ventilgehäuse 2 gestülpt, wobei aus dem Vorformling der Grundkörper 21 der Verteilanordnung 20 samt Umhüllung 8 ausgebildet wird. Dabei ist der Grundkörper 21 so geformt, dass in der Ventilanordnung 20 in diesem Ausführungsbeispiel exemplarisch mehrere Kanäle 22, 23 angeordnet sind. Die Blasform ist ferner so ausgebildet, dass die Fluidleitungen 6, 7, die in das Gehäuse 2 münden, nach dem Blasformen mit Kanälen 22 der Ventilanordnung 20 strömungsleitend verbunden sind.

## Patentansprüche

1. Medienführendes Element (1), umfassend ein Gehäuse (2), welches ein Volumen (3) begrenzt, wobei in das Gehäuse (2) zumindest zwei Fluidöffnungen (4, 5) eingebracht sind, wobei die Fluidöffnungen (4, 5) jeweils mit einer Fluidleitung (6, 7) verbunden sind, wobei das Volumen (3) mit den Fluidöffnungen (4, 5) zusammenwirkt, wobei das Gehäuse (2) außenseitig zumindest abschnittsweise von einer Umhüllung (8) umgeben ist, **dadurch gekennzeichnet, dass** das Gehäuse (2) und die Umhüllung (8) ein Durchströmvolumen (9) begrenzen, wobei in das Durchströmvolumen (9) zumindest zwei in die Umhüllung (8) eingebrachte Fluidanschlüsse (10, 11) münden.

2. Medienführendes Element nach Anspruch 1, **dadurch gekennzeichnet, dass** in dem Volumen (3) ein Ventilkörper (12) aufgenommen ist, wobei der Ventilkörper (12) mit den Fluidöffnungen (4, 5) zusammenwirkt.

3. Medienführendes Element nach Anspruch 1 oder 2, **dadurch gekennzeichnet, dass** das Gehäuse (2), der Ventilkörper (12) und/oder die Umhüllung (8) aus Kunststoff ausgebildet sind.

4. Medienführendes Element nach einem der Ansprüche 1 bis 3, **dadurch gekennzeichnet, dass** das Gehäuse (2) und/oder die Umhüllung (8) als Blasformteil ausgebildet sind.

5. Medienführendes Element nach einem der Ansprüche 2 bis 4, **dadurch gekennzeichnet, dass** das Ventil (1) als Schaltventil oder als Rückschlagventil ausgebildet ist.

6. Medienführendes Element nach einem der Ansprüche 2 bis 5, **dadurch gekennzeichnet, dass** das medienführende Element (1) als Rotationsventil ausgebildet ist, wobei der Ventilkörper (12) drehbar in dem Ventilgehäuse (2) angeordnet ist.

7. Medienführendes Element nach einem der Ansprüche 1 bis 6, **dadurch gekennzeichnet, dass** die Umhüllung (8) einen Abschnitt einer Verteilanordnung (20) bildet.

8. Medienführendes Element nach einem der Ansprüche 1 bis 7, **dadurch gekennzeichnet, dass** das Gehäuse (2) in der Umhüllung (8) aufgenommen ist.

9. Medienführendes Element nach einem der Ansprüche 1 bis 8, **dadurch gekennzeichnet, dass** das Durchströmvolumen (9) einer Seite des Gehäuses (2) zugeordnet ist und mediendicht von dem Volumen (3) getrennt ist.

10. Medienführendes Element nach einem der Ansprüche 1 bis 8, **dadurch gekennzeichnet, dass** Durchströmvolumen (9) das Gehäuse (2) ringförmig umgibt und mediendicht von dem Volumen (3) getrennt ist.

11. Medienführendes Element nach einem der Ansprüche 1 bis 10, **dadurch gekennzeichnet, dass** die die Umhüllung (8) durchdringenden Fluidleitungen (6, 7) als Stutzen ausgebildet sind.

12. Medienführendes Element nach einem der Ansprüche 1 bis 11, **dadurch gekennzeichnet, dass** die Fluidleitungen (6, 7) und das Gehäuse (2) einstückig sind.

13. Verteilanordnung (20) für den Transport von Medien, umfassend einen Grundkörper (21), in welchem mehrere Kanäle (22, 23) ausgebildet sind, wobei zumindest ein medienführendes Element (1) nach einem der vorherigen Ansprüche in dem Grundkörper (21) aufgenommen ist, wobei erste Kanäle (22) mit den Fluidleitungen (6, 7) und zweite Kanäle (23) mit den Fluidanschlüssen (10, 11) verbunden sind.

14. Verteilanordnung nach Anspruch 13, **dadurch gekennzeichnet, dass** der Grundkörper (21) als Blasformteil oder als Spritzgussteil ausgebildet ist.

15. Verteilanordnung nach Anspruch 13 oder 14, **dadurch gekennzeichnet, dass** der Grundkörper (21) die Umhüllung (8) ausbildet.
